# FASCICULE DE BREVET EUROPEEN

(11) **EP 3 155 717 B1**
(45) Date de publication et mention de la délivrance du brevet: **05.06.2024**
(21) Numéro de dépôt: 15725680.1
(22) Date de dépôt: 08.06.2015
(51) Int. Cl.: H02P 6/08

(54) **ENSEMBLE MÉCATRONIQUE POUR L'ENTRAÎNEMENT D'UN ORGANE EXTÉRIEUR UTILISANT UN MOTEUR SANS BALAI ET UN ENSEMBLE SIMPLE DE COMPOSANTS ÉLECTRONIQUES**
MECHATRONISCHES SYSTEM ZUR STEUERUNG EINES BÜRSTENLOSEN MOTORS MIT EINFACHEN ELEKTRONISCHEN ELEMENTEN
MECHATRONIC SYSTEM FOR CONTROLING BRUSHLESS MOTOR WITH SIMPLE ELECTRONIC ELEMENTS

(30) Priorité: 12.06.2014 FR 1455348
(43) Date de publication de la demande: 19.04.2017
(73) Titulaire: MMT SA, 6300 Zug (CH)
(72) Inventeur: RONDOT, Eric, F-25410 Berthelange (FR); ANDRIEUX, Gaël, CH-2533 Evilard (CH)
(74) Mandataire: IP Trust
(86) Numéro de dépôt international: PCT/EP2015/062657
(87) Numéro de publication internationale: WO 2015/189121

(56) Documents cités:
- EP-A1- 0 148 347
- WO-A1-98/19386
- WO-A1-03/095803
- FR-A1- 2 636 182
- US-A- 5 317 245
- US-A- 5 903 117
- US-B2- 7 225 773

## Description

### DOMAINE TECHNIQUE DE L'INVENTION

La présente invention concerne le domaine des moteurs électriques polyphasés à courant continu sans balai (brushless ou BLDC en anglais). Plus particulièrement, elle concerne une méthode de pilotage pour ces moteurs, n'utilisant pas de microprocesseur et ne nécessitant, pour le moteur, que deux fils d'alimentation électrique.

Le besoin de systèmes mécatroniques d'entrainement est de plus en plus pressant dans de multiples secteurs d'activités, avec également des environnements de plus en plus sévères. Le secteur automobile n'est pas épargné et les besoins de réduction d'émissions polluantes par les OEMS les conduit à proposer une multitude d'agrégats connexes au moteur à combustion. De surcroît, le downsizing des motorisations ainsi que le foisonnement des fonctions périphériques rendent les espaces disponibles de plus en plus faibles. De fait, les environnements dans lesquels doivent s'implanter les fonctions périphériques proposent des contraintes thermiques et mécaniques très sévères (température, vibrations, place disponible).

Il devient donc fondamental de proposer des systèmes de plus en plus robustes vis-à-vis de ces contraintes. La technologie du moteur à courant continu sans balais (BLDC) répond à ces contraintes mais est souvent pénalisée par un besoin en électronique de pilotage. L'électronique devient rapidement un point bloquant pour garantir une durée de vie du système à haute température. Des solutions optimisées et innovantes doivent donc être développées.

De plus, le secteur automobile est toujours plus concurrentiel et beaucoup de fonctions mécatroniques sont tombées dans le giron technologique des moteurs à courant continu à balai. En effet, pour des questions de coûts systèmes, le moteur à courant continu à balai (BDC) est souvent préféré au moteur à courant continu sans balais (BLDC), notamment et principalement pour des facilités de pilotage mais aussi de coûts électroniques réduits du fait de l'absence de microprocesseur. Ceci est renforcé par le fait que beaucoup d'électroniques de commandes véhicules (ECU en anglais) sont équipées de ponts de puissance (dit « en H ») dédiés au pilotage bidirectionnel d'actionneurs monophasés (moteur DC ou solénoïde polarisé ou non).

Toutefois l'ingénieur pourrait regretter que pour des raisons purement économiques, il ne puisse pas mettre en oeuvre une technologie offrant des atouts inégalables par rapport à un moteur DC : le BLDC qui offre robustesse, faible usure, compatibilité électromagnétique, compacité.

Le fait également d'employer une ECU existante permet d'accélérer la mise sur le marché d'un produit en évitant le débogage et la validation d'un nouveau logiciel de pilotage et de régulation.

### ETAT DE L'ART

Bon nombre de fonctionnalités, que ce soit dans le domaine automobile ou autres, requièrent des systèmes permettant un entrainement en rotation; ceux-ci pouvant être du domaine mécanique, ou électrique. Dans le cadre de la présente invention, nous considérerons seulement les actionneurs électriques. Le terme « actionneur » décrit dans cette invention l'ensemble formé par un moteur électrique, les moyens de détection éventuels de la position du rotor moteur, les moyens éventuels de transformation de mouvement, l'électronique de commutation et le connecteur.

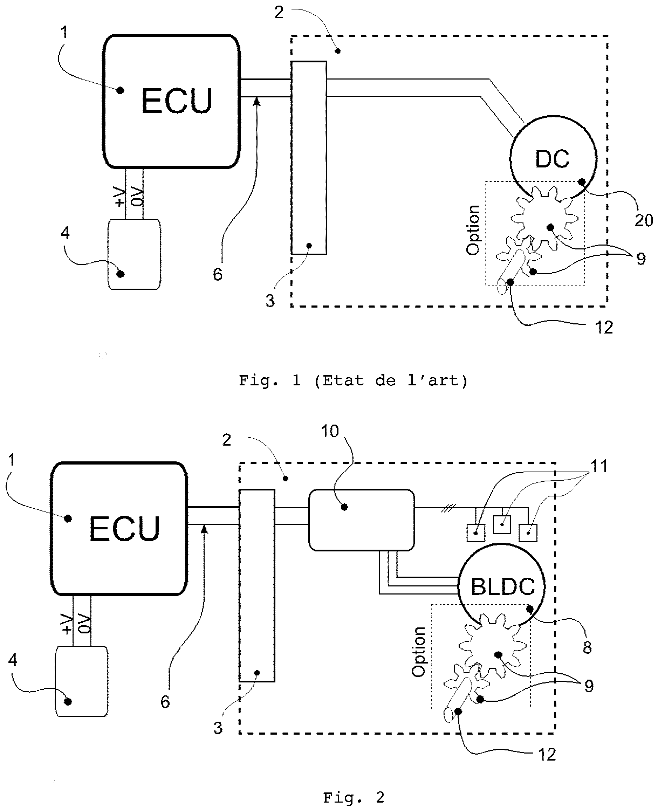

Deux grandes familles d'actionneurs peuvent être identifiées :
- Les actionneurs dits « dumb » ou actionneurs non intelligents. Un tel actionneur (2) est présenté en Fig. 1, l'actionneur (2) comprend un moteur DC à balai (20) et une sortie pour entrainement (12) et optionnellement un système mécanique de transformation de vitesse (9). La partie intelligente en charge de l'asservissement de vitesse, se trouve dans une électronique déportée (1) appelée ECU (Electronic Control Unit) par les personnes du métier.
- les actionneurs dits « smart » ou actionneurs intelligents, divulgués par exemple dans les documents US 5 903 117 A ou encore WO 98/19386A1. L'actionneur comprend un microcontrôleur en charge de la fonction d'asservissement de vitesse. Généralement ce type d'actionneur est piloté soit par un signal PWM, ou un bus de communication LIN ou CAN reconnus comme des standards dans le domaine automobile.

Pour les applications automobiles proches du moteur thermique telles que par exemple les pompes à eau principales ou auxiliaires destinées au refroidissement moteur, la solution « dumb » est de loin préférée à la solution « smart » pour des raisons de compatibilité à forte température des composants électroniques, notamment le microcontrôleur.

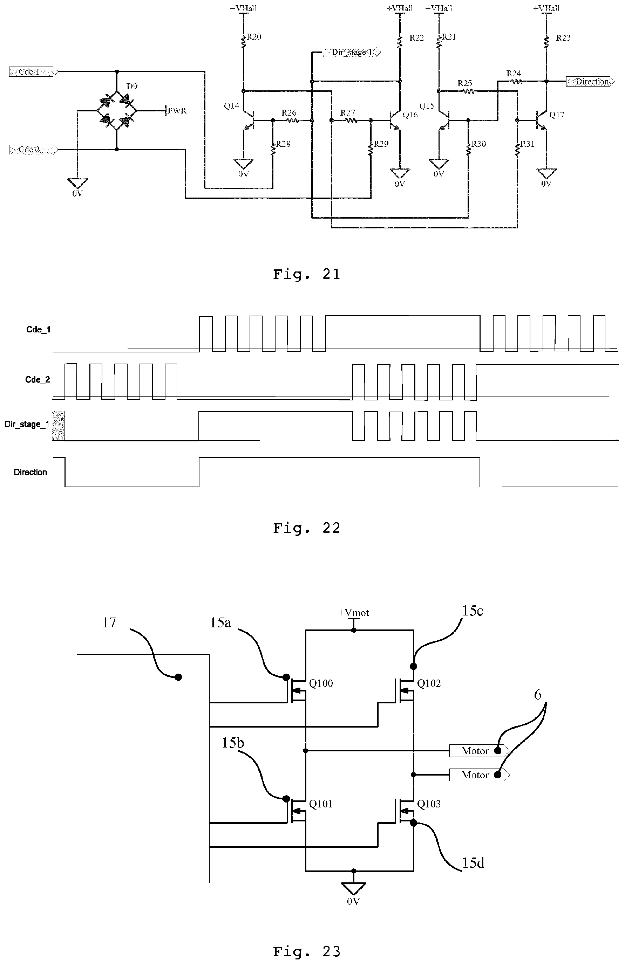

Dans une solution « dumb » telle que schématisée en Fig. 1, une ECU (1) détermine à partir d'informations obtenues dans le process, la vitesse de l'actionneur (2) puis calcule un signal de puissance (couple et vitesse) et de direction (6) appliqué à un moteur DC à balai (20). La sortie mécanique (12) est accouplée à un organe extérieur (non montré) à mouvoir comme un corps de pompe par exemple. L'action sur le moteur (20) est transmise à la sortie mécanique (12) de l'actionneur (2) généralement en direct sans transformation, ou optionnellement par l'intermédiaire d'un étage mécanique (9) de transformation de vitesse. Ainsi cette boucle fermée permet d'asservir en vitesse la sortie mécanique (12) de l'actionneur (2). Les connexions (3) entre l'ECU (1) et l'actionneur (2) sont peu nombreuses : 2 fils pour le moteur DC à balai (20) dont le signal différentiel entre ces deux fils peut être un signal positif ou négatif. Le moteur DC (20) répond aux signaux de couple et direction (6) fournis par l'ECU (1) au travers d'un pont de puissance dit pont H (Fig. 23) constitué de quatre transistors (15a, 15b, 15c, 15d).

Le brevet US005773941 décrit une invention permettant de piloter, uni-directionnellement, un moteur DC sans balai triphasé à l'aide de deux fils, dont un fil de référence (la masse ou 0V) et un fil de signal de puissance. Une alimentation externe délivre le signal de puissance qui peut être continu ou haché. L'électronique de commutation est autoalimentée par une alimentation rechargeable prenant son énergie sur le signal de puissance.

Que ce soit dans les applications industrielles ou automobiles, le moteur DC sans balai est aujourd'hui répandu et préféré pour les avantages qu'il offre par rapport au moteur DC comme cela est décrit dans le brevet US4365187 (colonne 1, ligne 9). Ce type de moteur est préféré dans sa structure moteur DC sans balai monophasé avec 1 bobine ou 2 demi-bobines. Une électronique simple pouvant être intégrée à proximité du moteur, voir dans le boitier constituant le moteur, gère l'auto-commutation du dit moteur à partir du signal fourni par une ou deux sondes de Hall.

### INCONVENIENT DE L'ART ANTERIEUR

L'électrification croissante des fonctions présentes sous le capot d'une automobile fait que les actionneurs électriques sont soumis à des contraintes diverses et de plus en plus rudes notamment en ce qui concerne la résistance à des températures ambiantes supérieures à 125°C.

Les systèmes existants dits « smart », embarquant un microcontrôleur et/ou une électronique complexe nécessaire au pilotage d'un moteur et à l'asservissement en vitesse de l'actionneur, sont limités en termes de température ambiante. Le type de composant économiquement 'viable' ne permet pas de franchir la limite des 125°C et nécessite souvent des moyens de refroidissement coûteux.

Les systèmes existants dits « dumb », sont quant à eux compatibles avec les températures ambiantes souhaitées de par le fait que l'actionneur ne comprend aucun composant électronique complexe et sensible. Seulement un tel actionneur fait appel à un moteur DC à balai qui industriellement parlant sera moins performant et compact qu'un moteur DC sans balai qui présente également l'énorme avantage d'une durée de vie très supérieure au traditionnel moteur DC avec balai. Il est admis par les personnes du métier, que les moteurs DC à balai sont sources de perturbation électromagnétique, ce qui est un point sensible dans un environnement de plus en plus occupé par les systèmes électroniques et autres calculateurs.

Une des structures classiques des moteurs DC sans balai polyphasé est un moteur à trois phases connectées soit en étoile ou soit en triangle laissant ainsi trois points de connexion pour l'alimentation du moteur. L'auto-commutation d'un moteur DC sans balai pour une application d'entrainement, nécessite l'utilisation de trois sondes permettant de connaître la position du rotor moteur. Concevoir un actionneur « dumb » avec un moteur DC sans balai, en lieu et place du moteur DC avec balai nécessite l'utilisation d'une ECU adaptée et conçue pour le pilotage de moteur triphasé à savoir un pont triphasé avec six transistors et cinq points de connexion avec les sondes rotor. Les systèmes d'asservissement en vitesse contrôlant l'actionneur dans les 4 quadrants, requièrent un contrôle bidirectionnel de la rotation du moteur, ce qui ne peut être réalisé par l'invention décrite dans le brevet US005773941 dont l'entrée (repérée 22 dans ce texte) n'accepte qu'une seule polarité.

Les autres applications des moteurs DC sans balai majoritairement monophasées telles que décrites dans le brevet US4365187 sont principalement employées pour des ventilateurs ou pompes ne nécessitant qu'un seul sens de rotation et ne justifiant pas d'un besoin de freinage. Comme décrit colonne 5 ligne 3 du brevet sus-cité, la structure du moteur de par sa géométrie ou le positionnement des sondes, doit être conçue pour assurer le bon démarrage du moteur dans le sens de rotation privilégié. De ce fait le moteur monophasé DC sans balai et son électronique de pilotage n'est pas adapté pour les applications d'entrainement dans le mode 4 quadrants, sujet de la présente invention.

### SOLUTION APPORTEE PAR L'INVENTION

La présente invention est divulguée par la revendication indépendante 1, et concerne un système de commande alimenté par une source d'énergie et un actionneur travaillant en entrainement. Le système de commande contrôlera l'actionneur à l'aide d'un algorithme d'asservissement de vitesse.

L'objet de l'invention est de proposer un actionneur mû par un moteur à courant continu DC sans balai tout en conservant les éléments existants identiques au système basé sur un moteur DC à balais. L'actionneur est relié au système de commande par l'intermédiaire d'un connecteur, 2 points, regroupant les signaux combinant la direction et le couple à produire par le moteur BLDC.

Un circuit électronique rudimentaire résistant à de forte température (>125°C), gère l'auto-commutation des N phases du moteur à l'aide de N sondes renseignant la position du rotor du moteur. L'objectif de la solution décrite ci-après est de proposer un compromis technologique permettant de répondre aux problématiques citées précédemment proposant une solution économique ne nécessitant pas de microprocesseur, permettant l'emploi d'un moteur à courant continu sans balai en lieu et place d'un moteur à courant continu avec balai, tout en gardant la possibilité d'utiliser un moteur polyphasé réversible et de le piloter dans les deux sens de rotation. L'invention se destine donc à tout moteur polyphasé à N phases.

La présente invention apporte une solution économique à la substitution d'un moteur à courant continu DC avec balai par un moteur à courant continu DC sans balai, en répondant aux critères suivants :
1- conserve une commande déportée existante (ECU), sans aucune modification que ce soit matérielle ou logicielle.
2- Interchangeabilité immédiate avec les produits déjà existant.
3- Accroit la durée de vie de l'actionneur.
4- Permet un pilotage bidirectionnel du moteur.
5- Très peu de composants électroniques (simple et robuste) embarqués dans l'actionneur.
6- Composants utilisés offrant une compatibilité et une résistance à des températures ambiantes >125°C.
7- Moteur DC sans balai et nombre de composants restreints permettent une intégration à forte compacité.
8- Gain sur le poids de l'actionneur.
9- Diminution des perturbations électromagnétiques.

Plus particulièrement, l'invention décrite dans la revendication indépendante 1 annexée concerne un ensemble mécatronique pour l'entrainement d'un organe comprenant une unité de commande et un actionneur, l'unité de commande comprenant un algorithme d'asservissement et un pont de puissance, ledit algorithme pilotant ledit pont de puissance, le pont de puissance délivrant un signal électrique bifilaire, l'actionneur comprenant un moteur électrique sans balai à N phases, des sondes de détection binaires de la position du rotor dudit moteur, des interrupteurs de puissance aptes à alimenter les N phases du moteur à partir du signal électrique bifilaire, caractérisé en ce que l'état des interrupteurs de puissance est commandé directement par un signal issu des sondes de détection. Par « directement » il s'entend que le signal commandant l'état des interrupteurs de puissance est issu 1- soit de la sortie d'une sonde de détection, 2- soit de la combinaison logique de plusieurs sonde de détection, 3- soit de la combinaison de une ou plusieurs sonde de détection et d'un signal de direction (sens de rotation du moteur, comme écrit ci-dessous). Aucun autre traitement que des opérations logiques très simples n'est appliqué entre le signal issu des sondes de détection et la commande d'état des interrupteurs de puissance. Ces opérations simples restent réalisables avec des portes logiques ou des composants discrets tels que transistors, diodes, résistances,

Dans un mode préféré, le sens de rotation du moteur est imposé par une logique combinatoire élémentaire bâtie à partir de la polarité du signal électrique bifilaire et du signal des sondes de détection.

Dans un mode préféré, les sondes de détection binaires de la position du rotor sont alimentées par le signal électrique bifilaire.

Dans un mode particulier de réalisation, le signal électrique bifilaire est un signal continu dont l'amplitude est contrôlée par l'algorithme d'asservissement.

Dans un autre mode de réalisation, le signal bifilaire est un signal haché dont le rapport cyclique est contrôlé par l'algorithme d'asservissement.

Dans un mode préféré, le signal bifilaire est redressé par un pont de diodes afin d'acheminer aux N phases du moteur un courant positif.

Il est à noter que l'invention est particulièrement destinée au domaine automobile, même si l'utilisation n'est exclusive. En effet, les applications de pompes d'entrainement (huile, air, carburant) sont visées par l'invention, de même que les systèmes d'entrainement, tels que décrit par exemple dans le brevet WO2003095803 permettant le déphasage de l'arbre à cames ou bien la levée variable des soupapes tel que décrit par exemple dans la demande US7225773.

### BREVE DESCRIPTION DES FIGURES

D'autres caractéristiques et avantages de l'invention ressortiront pleinement de la description qui en est faite ci-après, à titre indicatif et nullement limitatif, en référence aux dessins annexés dans lesquels :
- la Fig. 1 décrit un ensemble mécatronique de l'art antérieur,
- la Fig. 2 décrit un ensemble mécatronique suivant l'invention,
- la Fig. 3 décrit un exemple des différents bobinages multiphasés des moteurs auxquels l'invention se rapporte,
- la Fig. 4 décrit le détail du circuit électronique rudimentaire dans le cadre d'un actionneur commandé de manière bidirectionnelle,
- la Fig. 5 décrit le détail du circuit électronique rudimentaire dans le cadre d'un actionneur commandé de manière unidirectionnelle,
- la Fig. 6 décrit l'alimentation de la logique de commutation suivant un mode de réalisation préféré,
- la Fig. 7 décrit l'allure des couples, courants suivant un premier mode de fonctionnement, dit « 120° unipolaire»,
- la Fig. 8 décrit l'allure des couples, courants suivant un second mode de fonctionnement, dit « 180° unipolaire»,

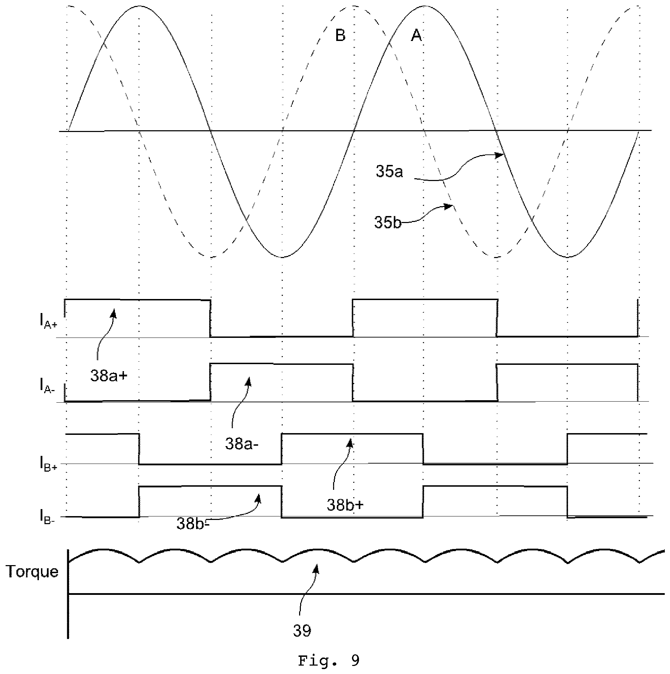

- la Fig. 9 décrit l'allure des couples, courants suivant un troisième mode de fonctionnement, dit « diphasé bipolaire à point milieu »,
- la Fig. 10 décrit le calage des sondes dans le cadre des deux modes des Fig. 7 et Fig. 8,
- la Fig. 11 décrit le circuit électronique de la logique de commutation suivant le premier mode « 120° unipolaire » ainsi que sa table de vérité,
- la Fig. 12 décrit le circuit électronique de la logique de commutation suivant le second mode « 180° unipolaire » ainsi que sa table de vérité,
- la Fig. 13 décrit le circuit électronique de la logique de commutation suivant le troisième mode « diphasé bipolaire à point milieu » ainsi que sa table de vérité,
- la Fig. 14 décrit une partie du circuit électronique de la logique de commutation (s'appliquant au schéma des Fig. 11 et Fig. 12 et Fig. 13) suivant un mode de réalisation particulier permettant la commande bidirectionnelle du moteur ainsi que sa table de vérité,
- la Fig. 15 décrit une partie du circuit électronique de la logique de commutation (s'appliquant au schéma des Fig. 11 et Fig. 12 et Fig. 13) suivant un mode de réalisation particulier permettant la commande bidirectionnelle du moteur ainsi que sa table de vérité, et comme alternative à la solution proposée en Fig. 14,
- la Fig. 16 décrit une partie du circuit électronique de la logique de commutation suivant un mode de réalisation particulier permettant la commande bidirectionnelle et bipolaire du moteur, ainsi que sa table de vérité.
- la Fig. 17 décrit une partie du circuit électronique de la logique de commutation suivant un mode de réalisation particulier permettant la commande bidirectionnelle et bipolaire (magnétiquement) du moteur , ainsi que sa table de vérité.
- la Fig. 18 décrit un circuit permettant d'extraire l'information de direction contenu dans le signal de commande,
- la Fig. 19 décrit un circuit permettant d'extraire l'information de direction contenu dans le signal de commande, et comme alternative proposée à la Fig. 18.
- la Fig. 20 décrit les signaux issus des Fig. 18 et Fig. 19,
- la Fig. 21 décrit un circuit permettant d'extraire l'information de direction contenu dans le signal de commande, et comme alternative proposée à la Fig. 18.
- la Fig. 22 décrit les signaux issus de la Fig. 21,
- la Fig. 23 décrit la configuration typique du pont de puissance d'une unité de commande.

### DESCRIPTION DETAILLEE D'EXEMPLES DE REALISATION

La Fig. 1 décrit, selon l'état de l'art, un ensemble mécatronique pour l'entrainement couramment utilisé dans les systèmes existant, composé d'une source d'énergie (4) alimentant une unité de commande (1) pilotant un actionneur (2) composé d'un moteur DC avec balai (20) éventuellement associé à un ensemble mécanique de transformation de vitesse (9). Un système de commande (1) agit sur les signaux combinés de couple et direction (6) regroupés dans un connecteur de liaison (3) afin de contrôler la vitesse de l'actionneur (2). La sortie mécanique (12) est accouplée à un organe extérieur à mouvoir comme un corps de pompage par exemple et dans une application automobile.

La Fig. 2 décrit un ensemble mécatronique selon l'invention composé d'une source d'énergie (4) alimentant une unité de commande (1) pilotant un actionneur (2) composé d'un moteur DC sans balai (8) éventuellement associé à un ensemble mécanique de transformation de vitesse (9). Un système de commande (1) agit sur les signaux combinés de couple et direction (6) regroupés dans un connecteur de liaison (3). La position du rotor du moteur (8) est lue à l'aide de N sondes (11) qui, par l'intermédiaire d'un circuit électronique rudimentaire (10), auto-commutent les N phases du moteur (8).

Il est à noter que le signal des N sondes (11), dans les illustrations présentées ici, n'est jamais renvoyé au système de commande (1) mais qu'il est envisageable de renvoyer ce signal des N sondes (11) au système de commande (1) pour décider éventuellement d'une action corrective ou informer le système de l'état de fonctionnement effectif du moteur.

De même, les sondes (11) de détection de la position du rotor peuvent être placées à proximité du rotor pour détecter les variations du champ magnétique émis par le rotor ou bien déportées sous la forme d'un codeur situé en amont ou aval du rotor, un arbre de liaison mécanique reliant solidairement rotor et codeur.

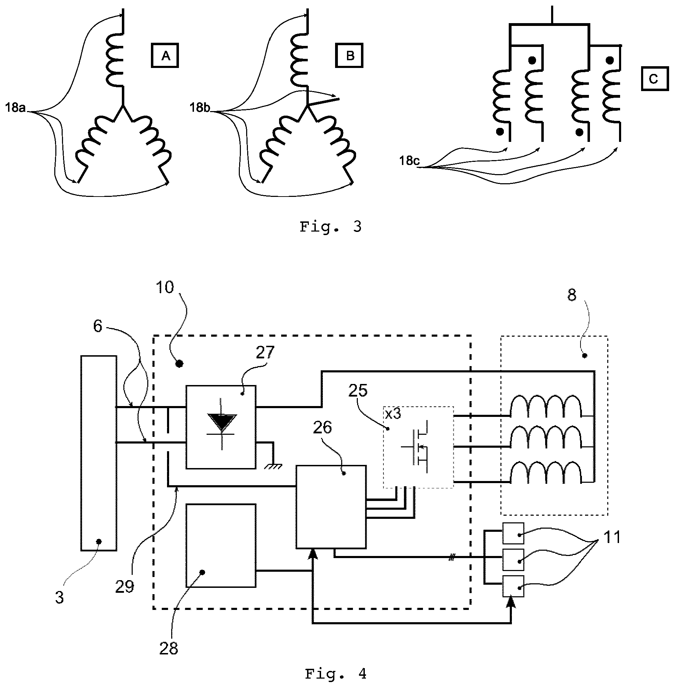

Un système de d'entrainement (Fig. 2) est composé d'une unité de commande électronique déportée (1), dit ECU, et d'un actionneur (2) intégrant un circuit électronique rudimentaire (10) exploitant les signaux en provenance de sonde (11) renseignant sur la position du rotor d'un moteur DC sans balai (8) afin d'auto-commuter ce dernier. La présente invention s'applique à tout type de moteur DC sans balai polyphasé comme le montre quelques exemples de topologies triphasées (A et B) et diphasée (C) présentés en Fig. 3. Pour des simplifications de lecture, les descriptifs faits à la suite seront basés uniquement sur un sous ensemble de N compris entre 2 et 3 avec N étant le nombre de phases du moteur DC sans balai. L'ECU (1) alimenté par la batterie du véhicule (4), exécute un algorithme d'asservissement de vitesse et génère les signaux de couple et de direction (6) à destination du moteur qui agira sur la sortie mécanique (12) de l'actionneur (2) par le biais d'un mécanisme de transformation de vitesse (9). Le circuit électronique d'auto-commutation (10) est conçu de telle sorte que l'actionneur (2) qu'il soit motorisé par un moteur DC sans balai (Fig. 2) ou par un moteur DC avec balai (Fig. 1) offre une compatibilité tant dans les fonctions que dans les connexions (3).

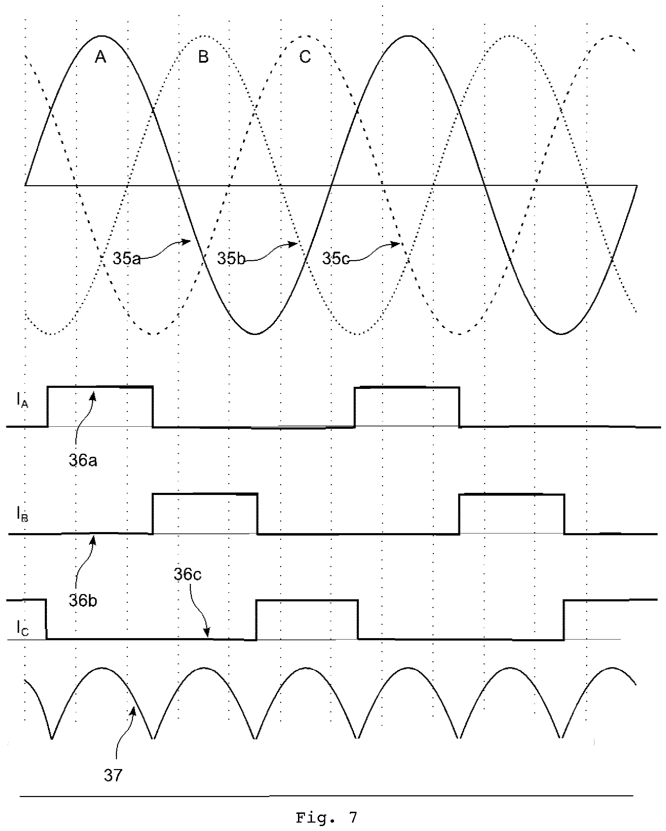

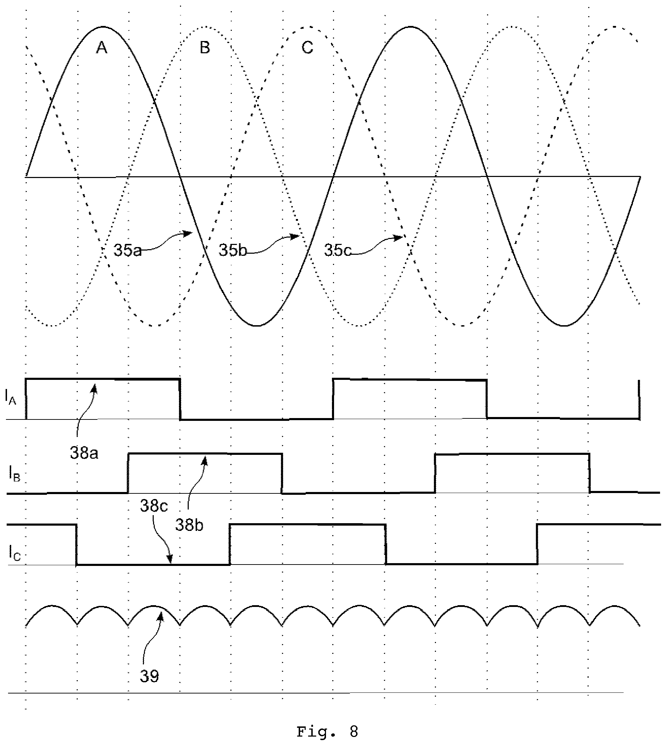

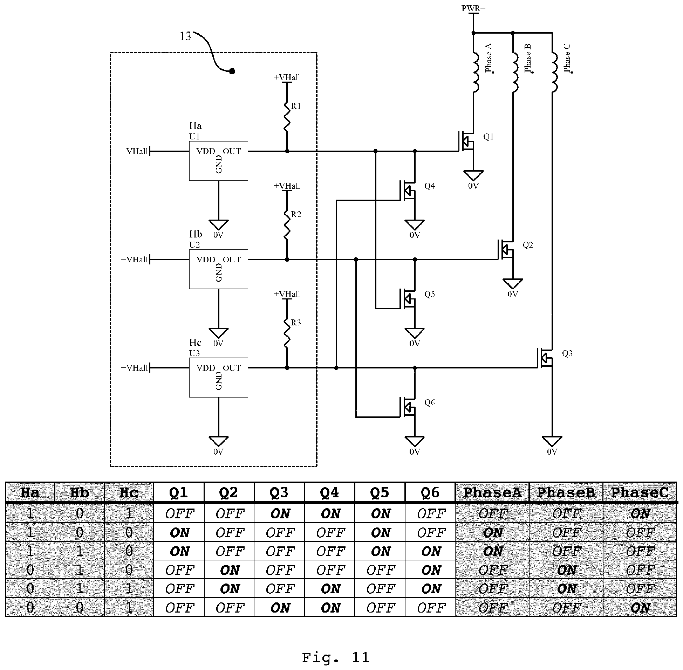

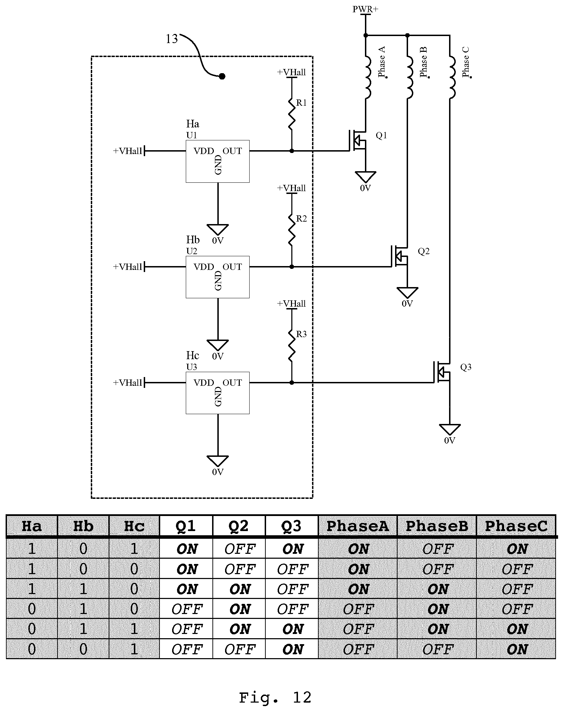

Dans un souci économique, le moteur DC sans balai (8) est commandé en mode unipolaire nécessitant seulement trois transistors. Ce qui simplifie également le circuit d'auto-commutation. Un système requérant de faibles variations de couple travaillera de préférence en mode 180° (Fig. 8) offrant six pas moteur par période électrique comparé à trois pas dans le mode 120° (Fig. 7). Le nombre de pas par période électrique pour chacun de ces modes de fonctionnement peut être déduit de la forme du signal de puissance (39 en Fig. 8 et 37 en Fig. 7). Le schéma électronique minimal permettant d'auto-commuter le moteur DC sans balai, est représenté en Fig. 11 et Fig. 12 pour les modes 120° et 180° respectivement.

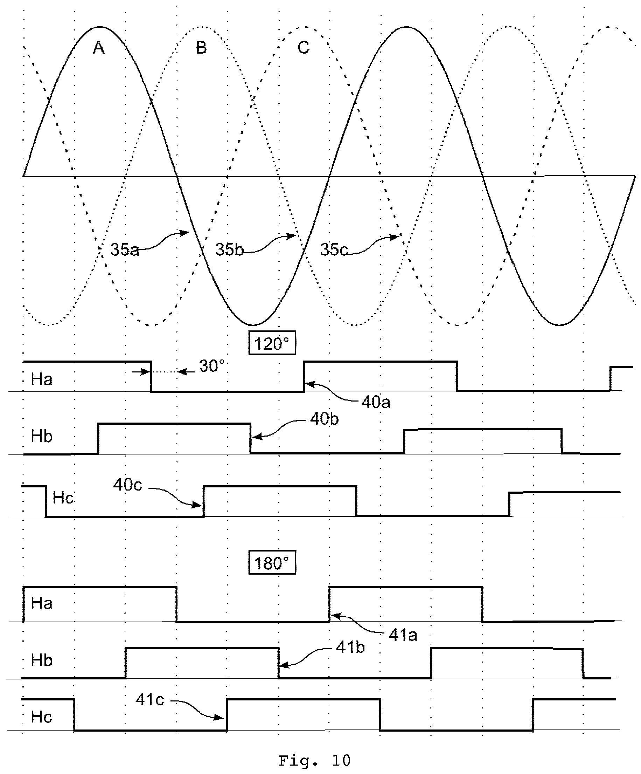

Pour chacun de ces modes la forme des courants circulant dans les phases du moteur, est représentée Fig. 7 et Fig. 8 pour les modes respectifs 120° et 180°. Le moment de commutation des sondes est différent suivant le mode de fonctionnement 120° ou 180°. Comme le montre la Fig. 10, le calage est avancé de 30° dans le cas du mode 120° afin de permettre, grâce à l'électronique simplifiée décrite en figure 11, d'obtenir un courant en phase avec la f.c.e.m. (force contre électromotrice) (35a, 35b, 35c) garant d'un couple moyen maximum.

La Fig. 7 décrit l'allure des courants (36a, 36b, 36c) pour chacune des phases du moteur (8) et leur phase respective par rapport à la f.c.e.m. (35a, 35b, 35c) des dites phase du moteur (8). Ce mode de pilotage est dit : mode 120° unipolaire. La courbe (37) représente la forme du couple moteur.

La Fig. 8 décrit l'allure des courants (38a, 38b, 38c) pour chacune des phases du moteur (8) et leur phase respective par rapport à la f.c.e.m. (35a, 35b, 35c) des dites phase du moteur (8). Ce mode de pilotage est dit : mode 180° unipolaire. La courbe (39) représente la forme du couple moteur (8).

Un descriptif en Fig. 10 donne les indications permettant de sélectionner le meilleur calage des sondes (11) par rapport aux références que sont les signaux de f.c.e.m. (35a, 35b, 35c) générés par les phases du moteur (8).

Particulièrement, la Fig. 10 montre le phasage des signaux (40a, 40b, 40c) des sondes Ha, Hb, Hc par rapport à la f.c.e.m. (35a, 35b, 35c) des bobines respectives pour un mode d'auto-commutation à 120° ainsi que le phasage des signaux (41a, 41b, 41c) des sondes Ha, Hb, Hc par rapport à la f.c.e.m. (35a, 35b, 35c) des bobines respectives pour un mode d'auto-commutation à 180°.

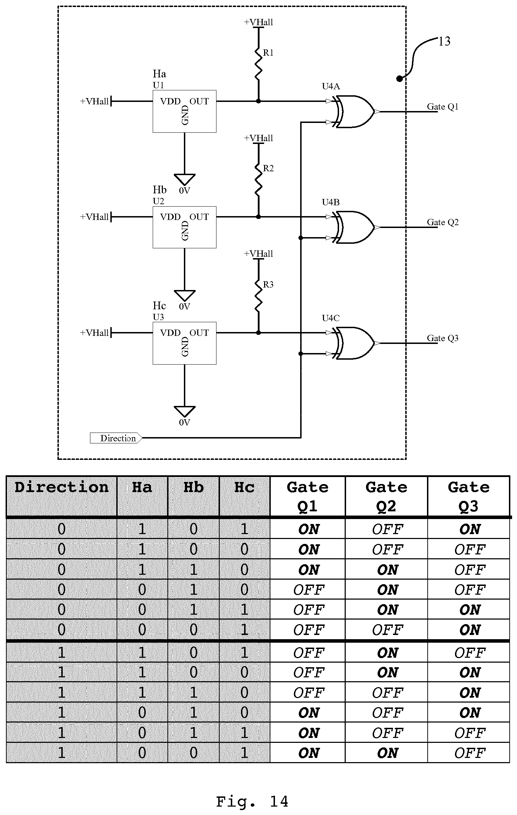

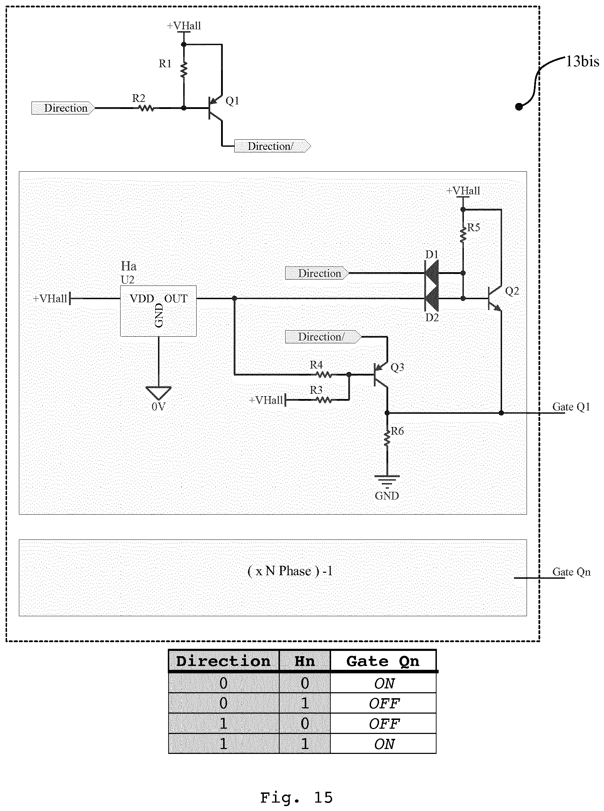

Il est connu des personnes du métier que le sens de rotation du moteur peut être inversé d'une part en croisant les connexions de chacune des bobines des phases du moteur, ou d'autre part en inversant le signal en sortie de chacune des sondes (11). Cette seconde possibilité est la solution retenue, mise en oeuvre par l'insertion d'une fonction 'OU EXCLUSIF' (U4a, U4b, U4c) à la sortie des sondes comme représenté en Fig. 14, pour former une commande bidirectionnelle (13). Un signal de direction commun à chacune des portes 'OU EXCLUSIF' (U4a, U4b, U4c) inversera ou non le signal provenant de la sonde (11) et de cette manière définira le sens de rotation du moteur (8). Cette option (13) est compatible avec un pilotage bidirectionnel en mode 120° ou 180°. Un autre moyen de réalisation (13 bis) présenté en Fig. 15 permet de réaliser cette même fonction 'OU EXCLUSIF' mais uniquement avec des composants discrets (diodes, résistances et transistors) offrant ainsi plus facilement une très bonne compatibilité aux environnements haute température. La table de vérité correspond à GATE = NOT ( DIRECTION ⊕ HN ). Ce procédé de réalisation pourra être préféré dans les applications nécessitant une compatibilité aux hautes températures > 125°C_{ambiant}.

L'étage de sortie d'une ECU (1) pilotant un actionneur, est typiquement un montage (Fig. 23) avec quatre transistors (15a, 15b,15c,15d) formant un pont de puissance « H » capable de délivré en sortie (6) un courant de signe positif ou négatif définissant le sens de rotation du moteur, et d'amplitude variable contrôlée par un découpage du signal (PWM) appliqué aux transistors (15a, 15b, 15c, 15d).

Le circuit électronique rudimentaire (10) n'acceptant pas une alimentation de polarité inverse, l'utilisation d'un pont redresseur à diodes (27) permet de séparer les signaux composés couple + direction (6) fournis par l'ECU (1) comme représenté en Fig. 4.

Le signal composé direction+couple (6) présent sur le connecteur (3) alimente le moteur (8) après redressement par un pont redresseur à diodes (27). Les N sondes (11) renseignent la logique de commutation (26) des N transistors de puissance (25) commutant les courants dans les N phases du moteur (8). Le signal (29) repris en amont du pont redresseur (27) indique le sens de rotation à la logique de commutation (26). Un régulateur de tension (28) fournit l'alimentation nécessaire aux sondes (11) et à la logique de commutation (26).

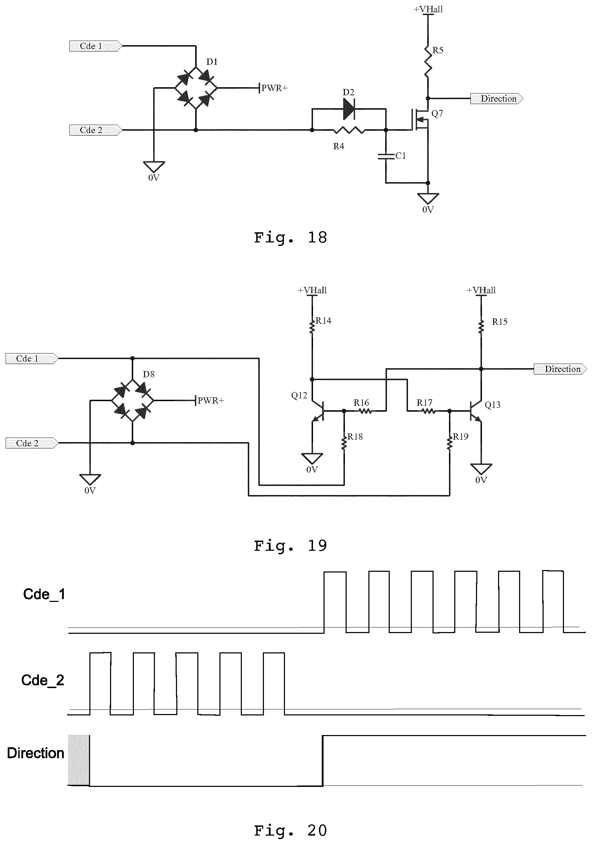

Le signal (29) sera repris en amont du pont redresseur (27) pour en extraire le signal de direction appliqué aux portes 'OU EXCLUSIF' (U4a, U4b, U4c). Ce signal de direction affecté par la commande PWM générée par l'ECU (1) et modulant le courant dans le moteur (8) pour en contrôler le couple, il est important de le mettre en forme grâce à un conditionneur donné en Fig. 18 représentant un exemple de circuit permettant d'extraire l'information de direction contenu dans le signal de commande couple + direction (6).

La Fig. 19 présente le schéma électronique d'un moyen de réalisation différent et présentant l'avantage de s'adapter automatiquement à la fréquence du signal de commande PWM généré par l'ECU (1). Le signal de commande couple + direction (6) est appliqué aux entrées d'une bascule RS, composée des transistors Q12 et Q13, produisant le signal de direction comme représenté en Fig. 20. Un circuit électronique étendu mettant en oeuvre deux bascules RS cascadées comme présenté en Fig. 21 permet d'extraire un signal de direction du signal bifilaire (6) quel que soit le mode de pilotage : découpage sur les transistors 'LOW SIDE' ou découpage sur les transistors 'HIGH SIDE' (mode dépendant de l'algorithme de pilotage de l'ECU (1)). Les signaux produits par ces bascules sont représentés en Fig. 22.

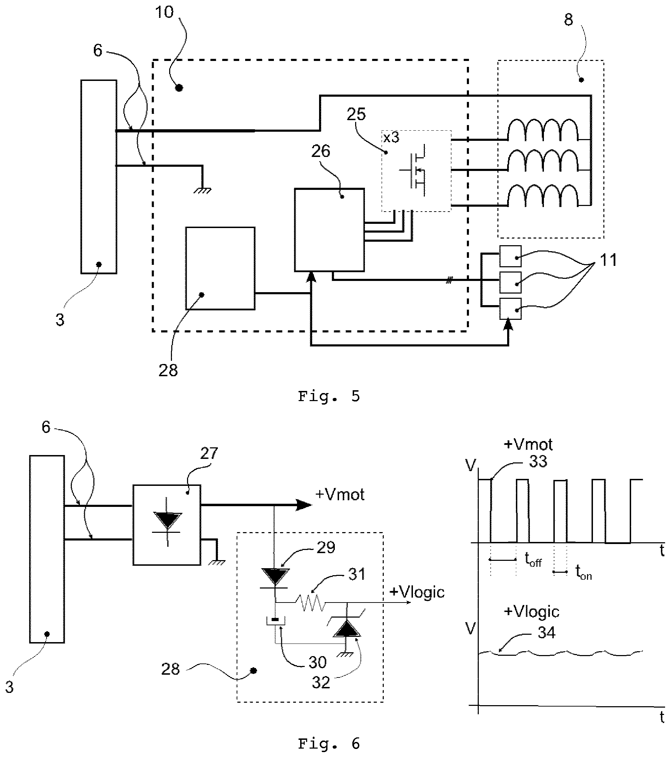

Pour des applications où la fonction de bidirectionnalité de l'actionneur (2) ne serait pas nécessaire, il est envisageable de simplifier le schéma électronique et de se conformer à celui proposé en Fig. 5. Dans ce cas le signal (6) délivré par l'ECU (1) ne contient plus que l'information de couple. La polarité de ce signal étant fixe, le pont redresseur (27) n'est plus indispensable, ainsi que le circuit d'extraction du signal de direction (Fig. 18) et les fonctions 'OU EXCLUSIF' (U4a, U4b, U4c).

Le signal de puissance (6) présent sur le connecteur (3) alimente le moteur (8). Les N sondes (11) renseignent la logique de commutation (26) des N transistors de puissance (25) commutant les courants dans les N phases du moteur (8). Un régulateur de tension (28) fournit l'alimentation nécessaire aux sondes (11) et à la logique de commutation (26).

Afin de conserver la compatibilité avec les systèmes d'actionneur existants, la source d'alimentation (28) des sondes (11) et du circuit électronique rudimentaire (10) doit être extraite des signaux disponibles via le connecteur (3).

La source d'alimentation provient du signal de puissance fourni par l'ECU, comme le montre la Fig. 6. Le circuit régulateur (28) permet d'obtenir un signal continu (34) et d'amplitude adéquate à partir d'un signal haché (33). Ici le régulateur de tension (28) est alimenté par le signal de commande (6). Le circuit diode (29) / condensateur (30) permet de stocker l'énergie transmise par le signal PWM de commande (33) durant le temps Tₒₙ. Le circuit résistance (31) / diode zener (32) limite la tension à une valeur acceptable par les composants de l'électronique d'auto-commutation (26). L'ECU (1) doit néanmoins fournir un signal de puissance minimum pour que le condensateur (30) puisse être rechargé durant la période Tₒₙ. La diode (29) empêche que le condensateur (30) se décharge dans les phases du moteur (8).

Les composants mis en oeuvre dans cette solution restant très basique, il est possible de les choisir dans un catalogue proposant des températures de fonctionnement supérieures à 125°C.

L'invention présentée précédemment sur la base d'un exemple de moteur triphasé peut tout aussi bien s'appliquer à un moteur polyphasé comportant de 1 à N bobines.

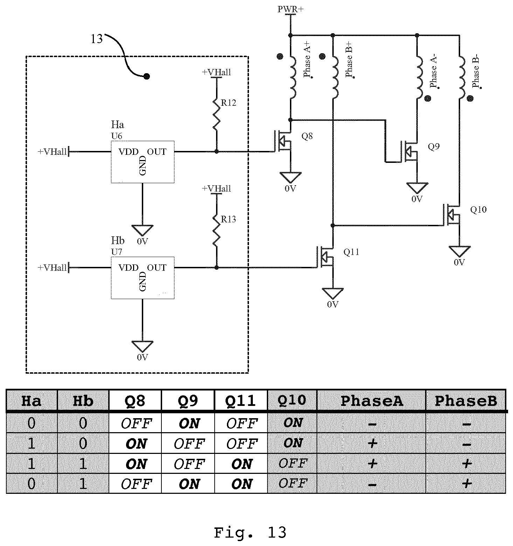

Un procédé de réalisation particulier est présenté Fig. 13, mettant en jeu un moteur DC sans balai diphasé à quatre demi-bobines (N = 2). Deux sondes (Ha et Hb) commandent directement l'état des N phases A et B à l'aide de quatre interrupteurs de puissance (Q8, Q9, Q10 et Q11). Le bloc de détection (13) peut également intégrer la fonction « OU EXCLUSIF » comme présentée Fig. 14 et Fig. 15 pour les applications nécessitant un pilotage bidirectionnel du moteur DC sans balais.

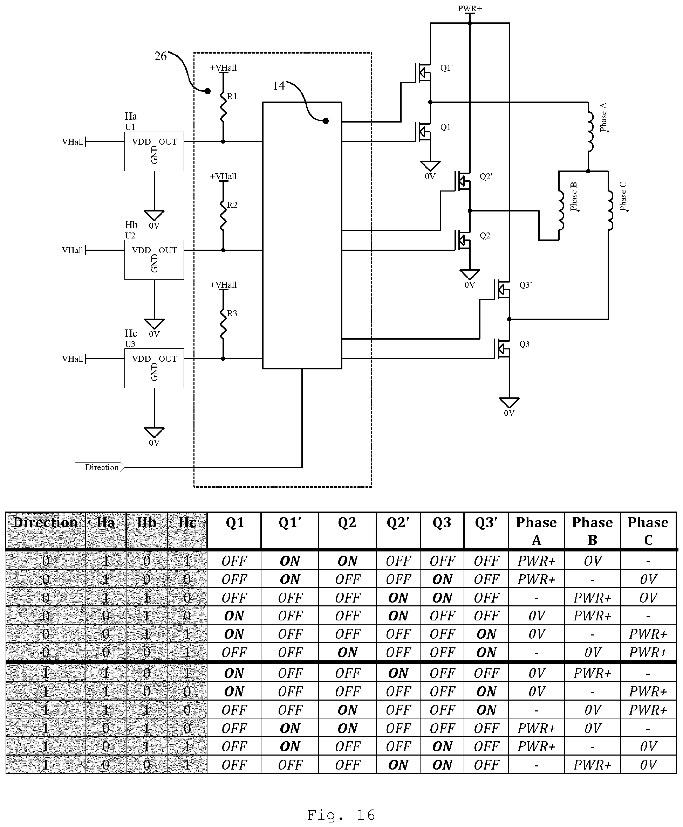

Il est connu des personnes du métier que les commutations d'un interrupteur de puissance en série avec une charge inductive telle la bobine d'une phase d'un moteur, génère une surtension suivant la formule : E = -Ld(i)/d(t). Dans les schémas classiques avec moteurs triphasés (ex : Fig. 11 et Fig. 12), la caractéristique V_{(BR)DSS} (Drain-to-Source Breakdown Voltage) du transistor MOSFET est fortement sollicité lors des phases de démagnétisation de la bobine. De par ce fait le transistor doit être dimensionné en conséquence. Dans le procédé de réalisation particulier mettant en oeuvre un moteur DC sans balais « diphasé à point milieu » (Fig. 13), il est avantageux de favoriser un bobinage dit « deux fils en main » afin de bénéficier d'un très bon couplage entre les demi-bobines de chaque phase. Obtenant ainsi une grande mutuelle inductance Phase A+/Phase A- et Phase B+/Phase B-, le flux magnétique basculera de la bobine « Phase A+ » à la bobine « Phase A- » lors de l'ouverture de l'interrupteur de puissance Q8 (Q9 étant piloté de façon complémentaire). De ce couplage, la surtension aux bornes des interrupteurs de puissance sera limitée à deux fois la tension d'alimentation (PWR+). Ceci est également valable pour l'autre phase moteur : PhaseB+/PhaseB-, Q10, Q11. L'invention présentée précédemment sur la base d'une électronique d'auto-commutation (26) opérant un pilotage unipolaire (le courant ne circule que dans un seul sens du bobinage) du moteur DC sans balai (8), reste applicable à une réalisation particulière offrant un pilotage bipolaire (le courant circule dans les deux sens du bobinage). La Fig. 16 décrit le schéma de principe de cette réalisation particulière ; la logique de commande (14) des six transistors de puissance (Q1, Q1', Q2, Q2', Q3, Q3') répond à la table de vérité montrée sur cette même figure.

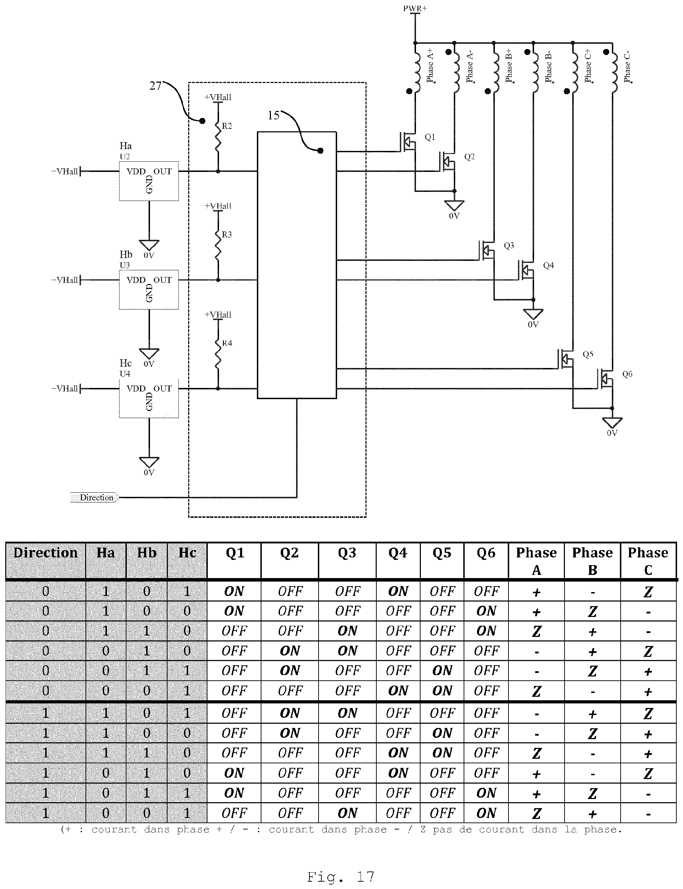

Ce procédé de réalisation sera réservé à des applications requérant un meilleur rendement et/ou un encombrement inférieur du moteur. En contrepartie, le circuit électronique rudimentaire (10) sera composé de six transistors de puissance (trois de plus), et sa logique de commande (14) associée sera plus complexe que les schémas de base Fig. 11 et Fig. 12. Un autre exemple de réalisation particulière offrant les mêmes avantages, avec un compromis sur l'optimisation du moteur, est présenté en Fig. 17 avec sa table de vérité. La différence réside dans l'utilisation de demi-bobines.

## Revendications

1. Ensemble mécatronique pour l'entrainement d'un organe comprenant une unité de commande (1) et un actionneur (2), l'unité de commande (1) comprenant un algorithme d'asservissement et un pont de puissance, ledit algorithme pilotant ledit pont de puissance, le pont de puissance délivrant un signal électrique bifilaire (6) composé d'un signal de puissance et d'un signal de direction, l'actionneur (2) comprenant un moteur électrique sans balai (8) polyphasé à N phases, des sondes (11) de détection binaires de la position du rotor dudit moteur (8), des interrupteurs de puissance (25) aptes à alimenter les N phases du moteur (8) à partir du signal électrique bifilaire (6), **caractérisé en ce que** le signal électrique bifilaire relie l'actionneur (2) à l'unité de commande (1) par l'intermédiaire d'un connecteur deux points, et qu'un circuit électronique d'auto-commutation (10) gère l'auto-commutation des N phases du moteur (8) à l'aide des sondes (11) de détection binaires renseignant la position du rotor du moteur, l'état des interrupteurs de puissance (25) est commandé directement par les signaux issus des sondes (11) de détection binaires.

2. Ensemble mécatronique pour l'entrainement d'un organe selon la revendication 1 **caractérisé en ce que** le moteur (8) polyphasé à N phases est constitué de N bobines unipolaire ou bipolaire, ou N*2 demi-bobines unipolaires.

3. Ensemble mécatronique pour l'entrainement d'un organe selon la revendication 1 ou 2 **caractérisé en ce que** le sens de rotation du moteur (8) est imposé par une logique combinatoire élémentaire bâtie à partir de la polarité du signal électrique bifilaire (6) et du signal des sondes (11) de détection.

4. Ensemble mécatronique pour l'entrainement d'un organe selon l'une des revendications 1 à 3 **caractérisé en ce que** les sondes (11) de détection binaires de la position du rotor sont alimentées par le signal électrique bifilaire (6).

5. Ensemble mécatronique pour l'entrainement d'un organe selon la revendication 1 à 4 **caractérisé en ce que** le signal électrique bifilaire (6) est un signal continu dont l'amplitude et le signe sont contrôlés par l'algorithme d'asservissement contenu dans l'unité de commande (1).

6. Ensemble mécatronique pour l'entrainement d'un organe selon l'une des revendications 1 à 5 **caractérisé en ce que** le signal bifilaire (6) est un signal haché dont le rapport cyclique est contrôlé par l'algorithme d'asservissement contenu dans l'unité de commande (1).

7. Ensemble mécatronique pour l'entrainement d'un organe selon l'une des revendications précédentes **caractérisé en ce que** le signal bifilaire (6) est redressé par un pont de diodes (27) afin d'acheminer aux N phases du moteur un courant positif.

8. Ensemble mécatronique pour l'entrainement d'un organe selon les revendications 3 et 6 **caractérisé en ce que** le sens de rotation du moteur (8) est déterminé par un signal de direction extrait du signal bifilaire (6) à l'aide d'une ou deux bascules le rendant indépendant de la fréquence et du rapport cyclique de hachage du dit signal bifilaire (6).

9. Ensemble mécatronique pour l'entrainement d'un organe selon les revendications précédentes **caractérisé en ce que** le moteur (8) est constitué de demi-bobine à fort couplage magnétique limitant la dissipation dans les interrupteurs de puissance (25) durant les phases de démagnétisation de la dite bobine.

10. Pompe d'entrainement de fluide constituée d'un ensemble mécatronique selon l'une des revendications précédentes.

11. Déphaseur d'arbre à cames automobile constitué d'un ensemble mécatronique selon l'une des revendications 1 à 9.

## Patentansprüche

1. Mechatronisches System zum Antreiben eines Elements, umfassend eine Steuereinheit (1) und einen Aktor (2), die Steuereinheit (1) umfassend einen Regelalgorithmus und eine Leistungsbrücke, wobei der Algorithmus die Leistungsbrücke ansteuert, wobei die Leistungsbrücke ein elektrisches Zweileitersignal (6) ausgibt, das aus einem Leistungssignal und aus einem Lenksignal zusammengesetzt ist, der Aktor (2) umfassend einen mehrphasigen bürstenlosen Elektromotor (8) mit N Phasen, binäre Sonden (11) für eine Detektion der Position des Rotors des Motors (8), Leistungsschalter (25), die geeignet sind, die N Phasen des Motors (8) ausgehend von dem elektrischen Zweileitersignal (6) zu versorgen, **dadurch gekennzeichnet, dass** das elektrische Zweileitersignal den Aktor (2) mit der Steuereinheit (1) über einen Zweipunktverbinder verbindet und dass eine elektronische Schaltung für eine selbsttätige Kommutierung (10) die selbsttätige Kommutierung der N Phasen des Motors (8) mithilfe der binären Detektionssonden (11) verwaltet, die die Position des Rotors des Motors angeben, der Zustand der Leistungsschalter (25) direkt durch die aus den binären Detektionssonden (11) hervorgegangenen Signale gesteuert wird.

2. Mechatronisches System zum Antreiben eines Elements nach Anspruch 1, **dadurch gekennzeichnet, dass** der mehrphasige Motor (8) mit N Phasen aus N einpoligen oder zweipoligen Spulen oder aus N*2 einpoligen Halbspulen besteht.

3. Mechatronisches System zum Antreiben eines Elements nach Anspruch 1 oder 2, **dadurch gekennzeichnet, dass** die Drehrichtung des Motors (8) durch eine elementare kombinatorische Logik vorgegeben wird, die ausgehend von der Polarität des elektrischen Zweileitersignals (6) und des Signals der Detektionssonden (11) aufgebaut ist.

4. Mechatronisches System zum Antreiben eines Elements nach einem der Ansprüche 1 bis 3, **dadurch gekennzeichnet, dass** die binären Sonden (11) für die Detektion der Position des Rotors durch das elektrische Zweileitersignal (6) versorgt werden.

5. Mechatronisches System zum Antreiben eines Elements nach Anspruch 1 bis 4, **dadurch gekennzeichnet, dass** das elektrische Zweileitersignal (6) ein kontinuierliches Signal ist, dessen Amplitude und Vorzeichen durch den in der Steuereinheit (1) enthaltenen Regelalgorithmus überwacht werden.

6. Mechatronisches System zum Antreiben eines Elements nach einem der Ansprüche 1 bis 5, **dadurch gekennzeichnet, dass** das Zweileitersignal (6) ein zerhacktes Signal ist, dessen Tastverhältnis durch den in der Steuereinheit (1) enthaltenen Regelalgorithmus überwacht wird.

7. Mechatronisches System zum Antreiben eines Elements nach einem der vorstehenden Ansprüche, **dadurch gekennzeichnet, dass** das Zweileitersignal (6) durch eine Diodenbrücke (27) gleichgerichtet wird, um einen positiven Strom zu den N Phasen des Motors zu leiten.

8. Mechatronisches System zum Antreiben eines Elements nach den Ansprüchen 3 und 6, **dadurch gekennzeichnet, dass** die Drehrichtung des Motors (8) durch ein Lenksignal bestimmt wird, das aus dem Zweileitersignal (6) mithilfe von einem oder zwei Flipflops extrahiert wird, was es unabhängig von dem Zerhackungstastverhältnis des Zweileitersignals (6) macht.

9. Mechatronisches System zum Antreiben eines Elements nach den vorstehenden Ansprüchen, **dadurch gekennzeichnet, dass** der Motor (8) aus einer Halbspule mit starker magnetischer Kopplung besteht, was den Verlust in den Leistungsschaltern (25) während der Entmagnetisierungsphasen der Spule begrenzt.

10. Fluidantriebspumpe, die aus einem mechatronischen System nach einem der vorstehenden Ansprüche besteht.

11. Kraftfahrzeugnockenwellenversteller, der aus einem mechatronischen System nach einem der Ansprüche 1 bis 9 besteht.

## Claims

1. Mechatronic assembly for driving a member, comprising a control unit (1) and an actuator (2), the control unit (1) comprising a servo-control algorithm and a power bridge, said algorithm controlling said power bridge, the power bridge providing a bifilar electrical signal (6) consisting of a power signal and a direction signal, the actuator (2) comprising a polyphase, brushless electric motor (8) having N phases, binary sensors (11) for detecting the position of the rotor of said motor (8), power switches (25) suitable for powering the N phases of the motor (8) from the bifilar electrical signal (6), **characterized in that** the bifilar electrical signal connects the actuator (2) to the control unit (1) via a two-point connector, and **in that** an electronic self-switching circuit (10) manages the self-switching of the N phases of the motor (8) by means of the binary detection sensors (11) which provide information on the position of the rotor of the motor, and the state of the power switches (25) is controlled directly by the signals from the binary detection sensors (11).

2. Mechatronic assembly for driving a member according to claim 1, **characterized in that** the polyphase motor (8) having N phases consists of N unipolar or bipolar coils or N*2 unipolar half-coils.

3. Mechatronic assembly for driving a member according to claim 1 or 2, **characterized in that** the direction of rotation of the motor (8) is imposed by an elementary combinatorial logic built from the polarity of the bifilar electrical signal (6) and the signal from the detection sensors (11).

4. Mechatronic assembly for driving a member according to any of claims 1 to 3, **characterized in that** the binary sensors (11) for detecting the position of the rotor are powered by the bifilar electrical signal (6).

5. Mechatronic assembly for driving a member according to claims 1 to 4, **characterized in that** the bifilar electrical signal (6) is a continuous signal, the amplitude and sign of which are controlled by the servo-control algorithm contained in the control unit (1).

6. Mechatronic assembly for driving a member according to any of claims 1 to 5, **characterized in that** the bifilar signal (6) is a hashed signal, the duty cycle of which is controlled by the servo-control algorithm contained in the control unit (1).

7. Mechatronic assembly for driving a member according to any of the preceding claims, **characterized in that** the bifilar signal (6) is rectified by a diode bridge (27) in order to convey a positive current to the N phases of the motor.

8. Mechatronic assembly for driving a member according to claims 3 and 6, **characterized in that** the direction of rotation of the motor (8) is determined by a direction signal extracted from the bifilar signal (6) by means of one or two flipflops, making it independent of the frequency and the hashing duty cycle of said bifilar signal (6).

9. Mechatronic assembly for driving a member according to the preceding claims, **characterized in that** the motor (8) consists of a half-coil with strong magnetic coupling which limits the dissipation in the power switches (25) during the phases of demagnetization of said coil.

10. Fluid-driving pump consisting of a mechatronic assembly according to any of the preceding claims.

11. Automotive camshaft phase shifter consisting of a mechatronic assembly according to any of claims 1 to 9.
